# EUROPEAN PATENT SPECIFICATION

(11) **EP 2 188 652 B1**
(45) Date of publication and mention of the grant of the patent: **16.05.2018**
(21) Application number: 08788456.5
(22) Date of filing: 29.08.2008
(51) Int. Cl.: G01V 5/00

(54) **SCANNING SYSTEMS FOR SECURITY AND MEDICAL SCANNERS HAVING MEANS TO CONTROL THE RADIATION SOURCE**
ABTASTSYSTEME FÜR SICHERHEIT UND MEDIZINISCHE SCANNER MIT MITTELN ZUM STEUERN DER STRAHLUNGSQUELLE
SYSTÈMES DE BALAYAGE

(30) Priority: 31.08.2007 US 969535 P; 28.02.2008 GB 0803646
(43) Date of publication of application: 26.05.2010
(60) Divisional application: 18165979.8
(73) Proprietor: Rapiscan Systems, Inc., Torrance, CA 90503 (US)
(72) Inventor: MORTON, Edward, James, Guildford, Surrey GU1 2SL (GB)
(74) Representative: Barker Brettell LLP
(86) International application number: PCT/GB2008/002897
(87) International publication number: WO 2009/027667

(56) References cited:
- WO-A-2006/053279
- US-A- 5 909 478
- US-A1- 2006 182 221
- US-B1- 6 713 773

## Description

### Field of the Invention

The present invention relates to scanning systems. It has particular application in scanning systems for cargo, but can also be used in scanners for other applications such as security and medical scanners.

### Background

Conventional cargo inspection systems comprise a radiation source that irradiates with X-rays or gamma-rays through the object under inspection to a sensor array that may be in an arc shape or configured into an "L"-shaped array. Other forms of sensor array will be apparent to the skilled person.

Often, such systems use a linear accelerator to produce X-rays or a radioactive source such as ¹³⁷Cs or ⁶⁰Co to produce gamma-rays.

Linear accelerators are typically operated with beam energies of 2MV to 9MV where a 2MV beam is one that is generated by firing a 2 MeV electron beam at a target, producing a broad spectrum of X-ray energies up to a maximum of 2 MeV but with a typical 1/3 of peak energy. This high-energy X-ray beam can penetrate large objects such as full containers or complete trucks.

Radioactive sources are often used in lower cost installations with a lower radiation penetration requirement. For example, they might be used for screening cars or smaller air-cargo type containers. ¹³⁷Cs provides gamma rays at an energy of 662 keV (more or less equivalent to a 2 MV linear accelerator source) while ⁶⁰Co produces gamma rays at an energy of around 1.2 MeV (more or less equivalent to a 4 MV linear accelerator source).

Previously, linear accelerators have often been fabricated using low frequency S-band microwave energy sources. The waveguide used in the linear accelerator defines the overall size of the finished radiation source. Therefore, such sources are typically bulky and heavy since thick radiation shielding must be installed around the whole accelerating structure. US6713773 B1 is an example of a prior art scanning system which controls the pulses of radiation based on a level of detected radiation which has passed through an object being scanned.

US5909478 discloses a portable imaging system, wherein a user has the possibility to control the x-ray image acquisition duration, in order to improve the generated image.

### Summary of the Invention

The present invention provides a scanning system comprising a radiation source arranged to direct pulses of radiation towards an object, detection means arranged to detect the radiation, wherein the detection means includes a plurality of detector banks arranged to produce a detector signal in response to detection of the radiation, acquisition means comprising a plurality of programmable gain integrating amplifiers each connected to a bank of detectors arranged to generate a data signal from the detector signal, image processing means arranged to generate image data which defines images of the object from digital signals from the acquisition means, a decision processing means arranged to receive and review the image data and determine whether the detector signals are outside the dynamic range of the amplifiers, instruct the source to fire more pulses and control the acquisition means so as to vary the number of pulses over which the amplifiers integrate the detector signal until the dynamic range required is achieved thereby to vary the sensitivity of the system.

The present invention also provides a method of scanning an object comprising directing pulses of radiation from a radiation source towards an object, detecting the radiation using radiation detection means comprising a plurality of detector banks, producing a detector signal in response to detection of the radiation, generating a data signal from the detector signal using acquisition means which comprises a plurality of programmable gain integrating amplifiers each connected to a bank of detectors, generating image data which defines images of the object using image processing means receiving digital data from the acquisition means, reviewing the image data and determining whether the detector signals are outside the dynamic range of the amplifiers, instructing the source to fire more pulses and controlling the acquisition means so as to vary the number of pulses over which the amplifiers integrate the detector signal until the dynamic range required is achieved thereby to vary the sensitivity of the system.

The present invention is directed in part at the use of compact imaging sources for imaging of cargo items from small containers up to large trucks.

A radioactive source is naturally compact and therefore of smallest possible weight given that the radiation shield must be located all around the radiation source. However, the radiation source may not be switched on and off, requiring a manual shutter for this purpose. Such a shutter may become stuck so posing a potential safety hazard. Further, the transportation of such sources can be problematic, particularly across national borders.
Linear accelerators are convenient but complex radiation sources in that they may be turned on and off simply using electronic means. When the power supply is disconnected, no radiation can be emitted at all. Transportation becomes more straightforward and they are intrinsically safer to operate.
In some embodiments of the present invention, a compact imaging source is built around a linear accelerator that operates at high frequency. High frequency results in low wavelength and so a more compact linear accelerator design is the result. Advantageously, an X-band linear accelerator may be used, or alternatively one with similarly high operating frequency.

To provide best imaging capability, the compact radiation source may be capable of operating in a number of modes.

Embodiments of the present invention will now be described by way of example only with reference to the accompanying drawings, in which:
**Figure 1** schematically shows a scanning system setup;
**Figure 2** schematically shows a scanning system according to another example;

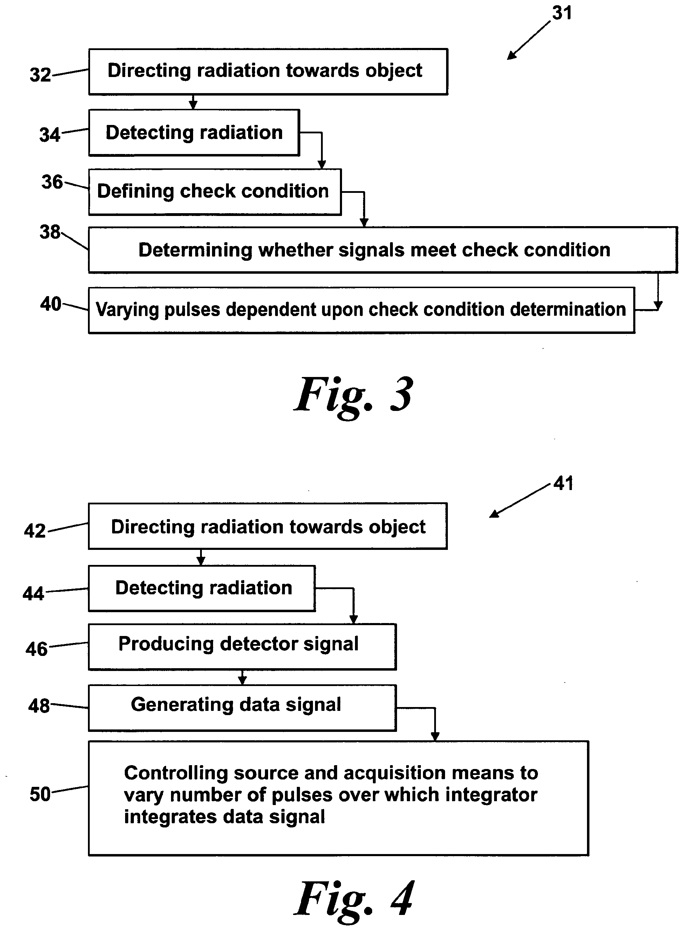

**Figure 3** is a flowchart showing a method of scanning an object not within the scope of this invention;
**Figure 4** is a flowchart showing a method of scanning an object not comprising all steps of the invention;
**Figure 5** schematically shows two typical scanning system geometries;
**Figure 6** graphically represents the timing of pulses of radiation from a radiation source;
**Figure 7** graphically represents variation of pulse frequency with object velocity;
**Figure 8** graphically represents variable energy pulsed radiation;
**Figure 9** graphically represents different variable energy pulsed radiation;
**Figure 10** schematically shows a switching gain integrator circuit for processing detector signals;
**Figure 11** graphically represents collection and integration of detector data over several radiation pulses;
**Figure 12** schematically shows part of a scanning system;
**Figure 13** schematically shows part of a scanning system according to an embodiment of the invention; and
**Figure 14** graphically represents operation of a threshold check level within said embodiment of the invention.

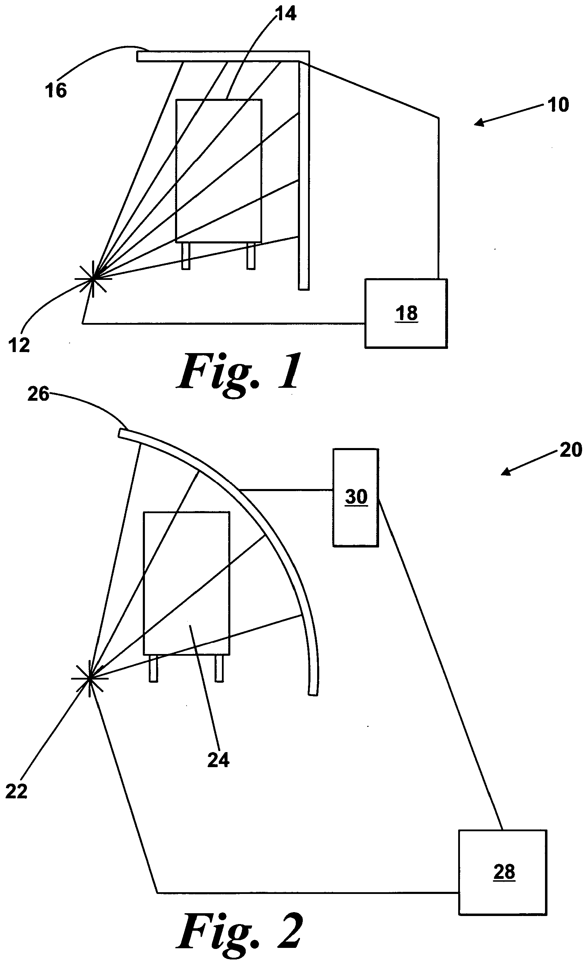

Referring to Figure 1, a scanning system 10 comprises a radiation source 12 arranged to direct radiation towards an object 14 to be scanned. The system 10 also includes a detection means 16 arranged to detect the radiation. The radiation source comprises a linear accelerator of the type previously described or may be any other suitable source (for example, a different type of previously described radiation source). The detector means 16 comprises an L-shaped sensor array, which comprises a plurality of banks of detectors. In this example the object 14 being scanned is a lorry. The system 10 also comprises a controller 18 which is arranged to control the radiation source 12 such that the source 12 produces radiation in pulses. The controller 18 is also arranged to define a check condition and to process signals from the detection means 16 in order to determine whether they meet the check condition. The controller 18 varies the pulses of the radiation source 12 dependent upon whether or not the signals from the detection means meet the check condition.

Referring to Figure 2, a scanning system 20 comprises a radiation source 22 arranged to direct radiation towards an object 24. The system 20 also includes detection means 26 in the form of a detector which produces a detector signal in response to detection of radiation in a similar manner to the embodiment of Figure 1. The system 20 also includes acquisition means 30 comprising an integrator which is arranged to generate a data signal from the signal which is received from the detector (the detector signal). The system 20 also includes control means 28 in communication with both the source 22 and the acquisition means 30. The control means 28 is arranged to control the source 20 and the acquisition means 30 to vary the number of pulses over which the integrator integrates the detector signal - thus allowing variation of the sensitivity of the system 20. Advantageously, if it is deemed necessary by the controller 28, the integrator can be used to generate a data signal which comprises a detector signal relating to more than one pulse of radiation. This may be particularly useful in situations where enough radiation is not detected from a single pulse. The control means 28 controls the source 22 to vary the frequency of the pulses in order to vary the number of pulses in which the integrator integrates the detector signal, or the number of pulses over which the integrator integrates the detector signal is varied by varying the time over which the integrator integrates the detector signal. The control means 18 is arranged to generate image data which defines images of the object 14 from some signals from the detection means.

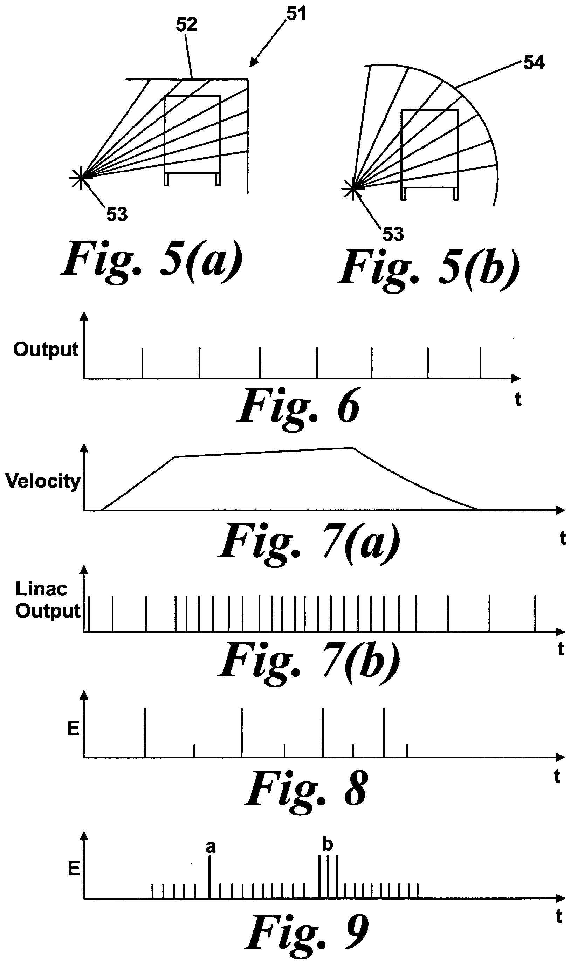

Two typical imaging geometries are shown in figure 5. Figure 5 (a) shows a system 51 configured with an "L"-shaped sensor array 52 with a compact radiation source 53 to the left while figure 5 (b) shows an arc-shaped sensor array 54 with the compact source 53 to the left.

A compact linear-accelerator source will typically run with a pulse configuration as shown in figure 6. Here, each pulse will typically have a pulse width of a few microseconds (1 - 10 µs is typical) with a pulse repetition frequency that is often in the range 50 to 200 Hz. The compact radiation source is capable of pulse frequency modulation such that the timing of each pulse from the linear accelerator is timed to match the velocity of the object under inspection as it passes through the slice-like radiation beam. A suitable pulse frequency modulation example is shown in figure 7. Figure 7(a) represents the object velocity, whilst Figure 7(b) shows the pulse timing. The pulse frequency increases as the object velocity increases. An object of the imaging system is to identify threat materials within the object under inspection. This may be achieved using an operator (such as a human operator) to look for objects within this image. However, it is also possible to provide some materials discrimination by using a variable energy radiation beam. As shown in figure 8, it is possible to pulse the energy of the linear accelerator source to alternate energies, for example a high energy of 6MV and a low energy of 2 MV. In this case, the radiation energy transmitted by the object will be different for the high and low energy pulses (since each material in the beam has a characteristic and energy-varying radiation absorbance). Such variation in energy of the pulses is incorporated with pulse frequency modulation to provide high quality scanning of the object under inspection. An objective of the compact cargo inspection system is to minimise the size and weight of the radiation source. The higher the energy of operation of the radiation source, the larger and heavier the source becomes. It can therefore be advantageous to operate the radiation source at the lowest possible energy. However, in some situations, the energy of the radiation source is too low to provide effective penetration through the object under inspection. In this case, the cargo item can be treated as not being properly inspected. Therefore, to address this problem, a pulse sequence as shown in figure 9 is adopted. Here, the majority of pulses are emitted at low energy (say 2 MV). The detector signals are recorded and checked to see if sufficient object penetration has been measured. If not, the radiation source is instructed to emit a high energy pulse at say 6MV (marked (a) in figure 9) in order to provide a set of data with the required penetration. Now, it is possible to resolve the majority of dark alarms (a dark alarm is defined as occurring where insufficient penetration was recorded by the low energy pulse) without providing excessive dose at the external surface of the unit. In some situations (marked (b) in figure 9), it may be necessary to provide several consecutive high energy pulses to get sufficient signal for the transmission measurement.

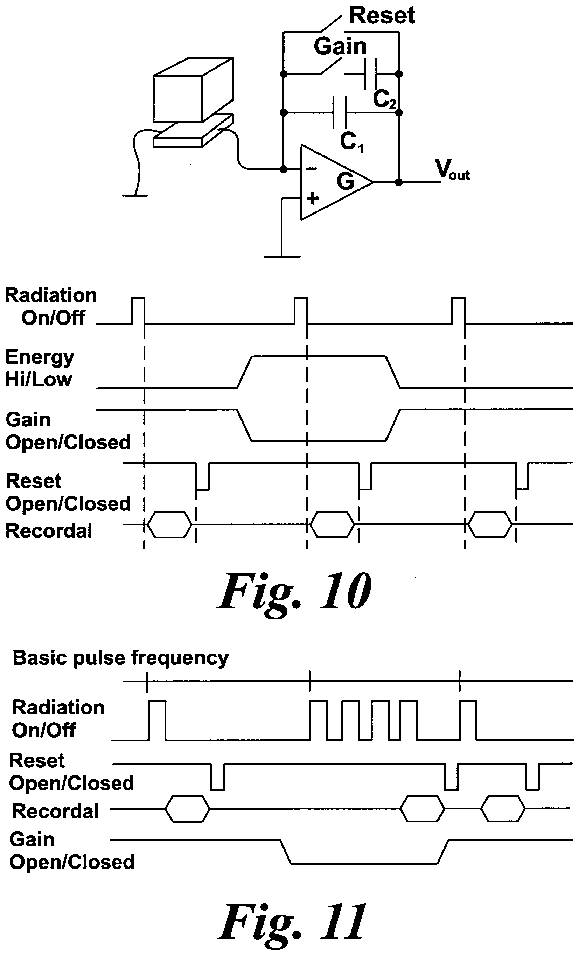

Typically, the high energy pulse will contain more X-ray photons than a low energy pulse. This can place severe demands on the dynamic range and noise of the front-end readout electronics. As shown in figure 10, a switching gain front end integrator circuit is provided whose operation is linked to the pulse generator for the linear accelerator. In normal operation with low energy pulses from the radiation source, the Gain switch is open and the value of C1 alone determines the gain. For example, if C1 = 3pF, then the output of the integrator with be 1V for a 3pC input charge from the front end photodiode. In high-energy mode the Gain switch is closed and now the total capacitance is equal to C1 + C2. For example, if C2 = 9pF, then the output of the integrator will be 0.25V for a 3pC input charge from the front-end photodiode. Figure 11 shows how the integrator may be held in integrating mode over several radiation pulses. Now, it is possible to acquire a burst containing multiple radiation pulses so that regions in which previously there was a dark alarm can now be resolved with measurable signal. Ideally, the base pulse frequency of the imaging system will be maintained (at say 50 Hz) with the additional pulses being fired within the normal beam off time (say at 400 Hz pulse repetition frequency). In this way, the normal imaging quality is not compromised by the additional measurement. Figure 11 shows the Gain switch being turned to low gain mode during the extra pulse measurement period although it would also be possible to operate in the standard high gain mode for extra sensitivity.

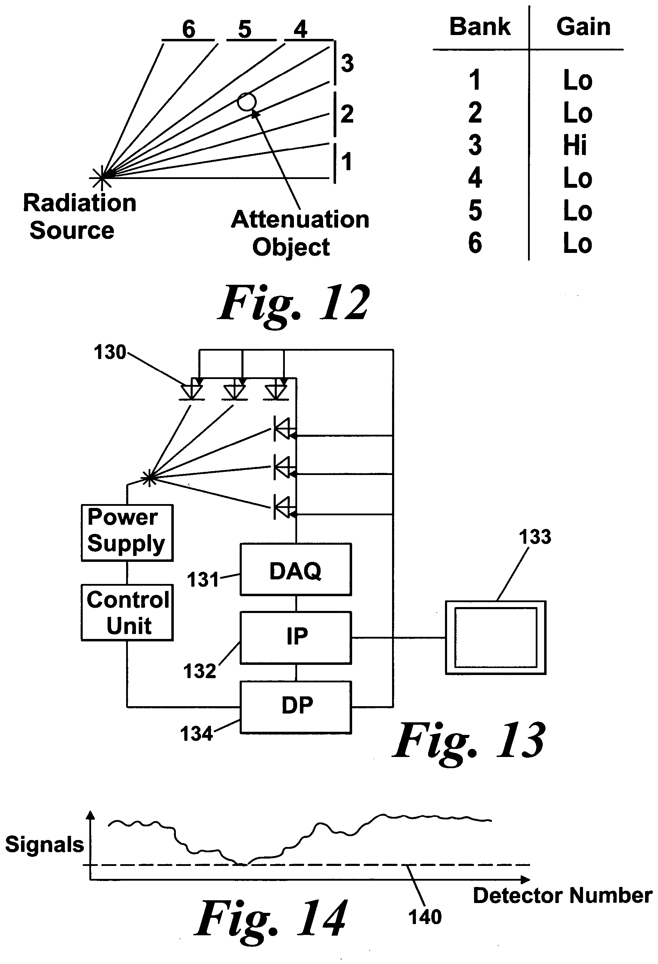

Figure 12 s hows that the gain switch may be operated differently on different detector banks or groups (or different detector portions provided on the same detector) in order to optimise the dynamic range of the X-ray detector system. In this case six detector banks are shown labelled 1-6.

Figure 13 shows an embodiment of the invention, in which there is provided a system for generating an optimal pulse sequence and gain selection by analysis of the image data itself. Here, programmable gain integrating amplifiers 130 are connected to each bank of detectors. Data from these detectors pass to a data acquisition unit 131 which outputs digital signals to an Image Processing Unit 132 which appends the new data to the image data to be displayed as an image on a monitor 133. A Decision Processing Unit reviews the new image and determines whether the new data is outside of the dynamic range of the integrating amplifier. If it is, the Decision Processing Unit 134 will cause the amplifier to continue to integrate and will instruct the radiation source to fire more pulses until the dynamic range required of the measurement has been achieved.

The Decision Processing Unit may use a range of algorithms, but a simple threshold algorithm such as that shown in figure 14 is typically sufficient. If a signal is received below threshold 140, the Decision Processor will instruct the source to provide further pulses. More sophisticated algorithms will use methods such as image segmentation and connected component labelling to identify from one or more 2D image scans the extent of a volume projected into one or more subsequent 2D detected images and to automatically predict when the multiple pulse stream will be required.

It is noted that the radiation shielding can be designed around the low energy pulse requirements since for a very large fraction of time it is this radiation beam that is generated. For the small fraction of time that a high energy beam is required, the instantaneous dose will be somewhat higher. However, dose is calculated in a time averaged fashion and hence if the Decision Processor is restricted in the number of high energy pulses that it can emit (for example, no more than 5% of the time), then radiation dose can be kept to an acceptable level with very moderate radiation shielding requirements.

Various modifications may be made to the present invention without departing from its scope.

## Claims

1. A scanning system (10, 20, 51) comprising a radiation source (12, 22, 53) arranged to direct pulses of radiation towards an object (14, 24), detection means (16, 26, 52, 54) arranged to detect the radiation, wherein the detection means includes a plurality of detector banks (1-6) arranged to produce a detector signal in response to detection of the radiation, acquisition means (131) comprising a plurality of programmable gain integrating amplifiers (130) each connected to a bank of detectors arranged to generate a data signal from the detector signal, image processing means (132) arranged to generate image data which defines images of the object (14, 24) from digital signals from the acquisition means (131), a decision processing means (134) arranged to receive and review the image data and determine whether the detector signals are outside the dynamic range of the amplifiers (130), instruct the source (12, 22, 53) to fire more pulses and control the acquisition means (131) so as to vary the number of pulses over which the amplifiers (130) integrate the detector signal until the dynamic range required is achieved thereby to vary the sensitivity of the system.

2. A system according to claim 1 wherein the decision processing means (134) is arranged to vary said number of pulses by varying the frequency of the pulses.

3. A system according to claim 1 wherein the decision processing means (134) is arranged to vary said number of pulses by varying the time over which the amplifiers (130) integrate the detector signal.

4. A system according to any foregoing claim wherein the radiation source (12, 22, 53) comprises an accelerator arranged to accelerate particles towards a target to generate the radiation.

5. A method of scanning an object comprising directing pulses of radiation from a radiation source (12, 22, 53) towards an object (14, 24), detecting the radiation using radiation detection means (16, 26, 52, 54) comprising a plurality of detector banks (1-6), producing a detector signal in response to detection of the radiation, generating a data signal from the detector signal using acquisition means (131) which comprises a plurality of programmable gain integrating amplifiers (130) each connected to a bank of detectors, generating image data which defines images of the object using image processing means (132) receiving digital signals from said acquisition means (131), reviewing the image data and determining whether the detector signals are outside the dynamic range (140) of the amplifiers (130), instructing the source (12, 22, 53) to fire more pulses and controlling the acquisition means (131) so as to vary the number of pulses over which the amplifiers (130) integrate the detector signal until the dynamic range (140) required is achieved thereby to vary the sensitivity of the system.

## Patentansprüche

1. Abtastsystem (10, 20, 51), umfassend eine Strahlungsquelle (12, 22, 53), die eingerichtet ist, um Strahlungsimpulse auf ein Objekt (14, 24) zu richten, ein Detektionsmittel (16, 26, 52, 54), das eingerichtet ist, um die Strahlung zu detektieren, wobei das Detektionsmittel mehrere Detektorbänke (1-6) aufweist, die eingerichtet sind, um ein Detektorsignal ansprechend auf die Detektion der Strahlung zu erzeugen, ein Erfassungsmittel (131), umfassend mehrere programmierbare verstärkungsintegrierende Verstärker (130), die jeweils mit einer Bank von Detektoren verbunden sind, das eingerichtet ist, um ein Datensignal aus dem Detektorsignal zu generieren, ein Bildverarbeitungsmittel (132), das eingerichtet ist, um Bilddaten, die Bilder des Objekts (14, 24) definieren, aus Digitalsignalen von dem Erfassungsmittel (131) zu generieren, ein Entscheidungsverarbeitungsmittel (134), das eingerichtet ist, um die Bilddaten zu empfangen und zu überprüfen und zu bestimmen, ob die Detektorsignale außerhalb des dynamischen Bereichs der Verstärker (130) liegen, die Quelle (12, 22, 53) anzuweisen, mehr Impulse abzufeuern und das Erfassungsmittel (131) derart zu steuern, dass die Anzahl von Impulsen variiert wird, über welche die Verstärker (130) das Detektorsignal integrieren, bis der erforderliche dynamische Bereich erzielt wird, um dadurch die Empfindlichkeit des Systems zu variieren.

2. System nach Anspruch 1,
wobei das Entscheidungsverarbeitungsmittel (134) eingerichtet ist, um die Anzahl von Impulsen durch Variieren der Frequenz der Impulse zu variieren.

3. System nach Anspruch 1,
wobei das Entscheidungsverarbeitungsmittel (134) eingerichtet ist, um die Anzahl von Impulsen durch Variieren der Zeit, über welche die Verstärker (130) das Detektorsignal integrieren, zu variieren.

4. System nach einem der vorhergehenden Ansprüche,
wobei die Strahlungsquelle (12, 22, 53) einen Beschleuniger umfasst, der eingerichtet ist, um Teilchen zu einem Ziel zu beschleunigen, um die Strahlung zu generieren.

5. Verfahren zum Abtasten eines Objekts, umfassend:
Richten von Strahlungsimpulsen von einer Strahlungsquelle (12, 22, 53) auf ein Objekt (14, 24),
Detektieren der Strahlung unter Verwendung eines Strahlungsdetektionsmittels (16, 26, 52, 54), das mehrere Detektorbänke (1-6) umfasst,
Erzeugen eines Detektorsignals ansprechend auf die Detektion der Strahlung,
Generieren eines Datensignals aus dem Detektorsignal unter Verwendung eines Erfassungsmittels (131), das mehrere programmierbare verstärkungsintegrierende Verstärker (130) umfasst, die jeweils mit einer Bank von Detektoren verbunden sind,
Generieren von Bilddaten, die Bilder des Objekts definieren, unter Verwendung eines Bildverarbeitungsmittels (132),
Empfangen von Digitalsignalen von dem Erfassungsmittel (131),
Überprüfen der Bilddaten und Bestimmen, ob die Detektorsignale außerhalb des dynamischen Bereichs (140) der Verstärker (130) liegen,
Anweisen der Quelle (12, 22, 53), mehr Impulse abzufeuern, und Steuern des Erfassungsmittels (131) derart, dass die Anzahl von Impulsen variiert wird, über welche die Verstärker (130) das Detektorsignal integrieren, bis der erforderliche dynamische Bereich (140) erzielt wird, um dadurch die Empfindlichkeit des Systems zu variieren.

## Revendications

1. Système d'examen par balayage (10, 20, 51) comprenant une source de rayonnement (12, 22, 53) agencée pour diriger des impulsions de rayonnement vers un objet (14, 24), un moyen de détection (16, 26, 52, 54) agencé pour détecter le rayonnement, le moyen de détection comportant une pluralité de rangées de détecteurs (1-6) agencés pour produire un signal de détecteur en réponse à la détection du rayonnement, un moyen d'acquisition (131) comprenant une pluralité d'amplificateurs à intégration du gain programmables (130) reliés chacun à une rangée de détecteurs agencés pour générer un signal de données à partir du signal de détecteur, un moyen de traitement d'images (132) agencé pour générer des données d'image qui définissent des images de l'objet (14, 24) à partir de signaux numériques provenant du moyen d'acquisition (131), un moyen de traitement de décision (134) agencé pour recevoir et inspecter les données d'image et déterminer si les signaux de détecteur sont à l'extérieur de la gamme dynamique des amplificateurs (130), donner l'instruction à la source (12, 22, 53) d'émettre plus d'impulsions et contrôler le moyen d'acquisition (131) de manière à faire varier le nombre d'impulsions sur lesquelles les amplificateurs (130) intègrent le signal de détecteur jusqu'à ce que la gamme dynamique requise soit atteinte pour faire varier ainsi la sensibilité du système.

2. Système selon la revendication 1 dans lequel le moyen de traitement de décision (134) est agencé pour faire varier ledit nombre d'impulsions en faisant varier la fréquence des impulsions.

3. Système selon la revendication 1 dans lequel le moyen de traitement de décision (134) est agencé pour faire varier ledit nombre d'impulsions en faisant varier le temps sur lequel les amplificateurs (130) intègrent le signal de détecteur.

4. Système selon une quelconque revendication précédente dans lequel la source de rayonnement (12, 22, 53) comprend un accélérateur agencé pour accélérer des particules vers une cible pour générer le rayonnement.

5. Procédé d'examen par balayage d'un objet comprenant les étapes consistant à diriger des impulsions de rayonnement depuis une source de rayonnement (12, 22, 53) vers un objet (14, 24), détecter le rayonnement en utilisant un moyen de détection de rayonnement (16, 26, 52, 54) comprenant une pluralité de rangées de détecteurs (1-6), produire un signal de détecteur en réponse à la détection du rayonnement, générer un signal de données à partir du signal de détecteur en utilisant un moyen d'acquisition (131) qui comprend une pluralité d'amplificateurs à intégration du gain programmables (130) reliés chacun à une rangée de détecteurs, générer des données d'image qui définissent des images de l'objet en utilisant un moyen de traitement d'images (132) recevant des signaux numériques provenant dudit moyen d'acquisition (131), inspecter les données d'image et déterminer si les signaux de détecteur sont à l'extérieur de la gamme dynamique (140) des amplificateurs (130), donner l'instruction à la source (12, 22, 53) d'émettre plus d'impulsions et contrôler le moyen d'acquisition (131) de manière à faire varier le nombre d'impulsions sur lesquelles les amplificateurs (130) intègrent le signal de détecteur jusqu'à ce que la gamme dynamique (140) requise soit atteinte pour faire varier ainsi la sensibilité du système.
